# FASCICULE DE BREVET EUROPEEN

(11) **EP 4 068 056 B1**
(45) Date de publication et mention de la délivrance du brevet: **20.08.2025**
(21) Numéro de dépôt: 22164976.7
(22) Date de dépôt: 29.03.2022
(51) Int. Cl.: G06F 3/01

(54) **COMPARTIMENT PASSAGERS POUR VÉHICULE DE TRANSPORT DE PASSAGERS COMPORTANT UN ÉCRAN D'INFORMATION ET MÉTHODE D'UTILISATION D'UN TEL ÉCRAN D'INFORMATION**
FAHRGASTRAUM FÜR EIN FAHRZEUG ZUR BEFÖRDERUNG VON PASSAGIEREN MIT EINEM INFORMATIONSBILDSCHIRM UND VERFAHREN ZUR VERWENDUNG EINES SOLCHEN INFORMATIONSBILDSCHIRMS
PASSENGER COMPARTMENT FOR PASSENGER TRANSPORT VEHICLE COMPRISING AN INFORMATION SCREEN AND METHOD FOR USING SUCH AN INFORMATION SCREEN

(30) Priorité: 30.03.2021 FR 2103249
(43) Date de publication de la demande: 05.10.2022
(73) Titulaire: ALSTOM Holdings, 93400 Saint-Ouen-sur-Seine (FR)
(72) Inventeur: MIGLIANICO, Denis, 75009 PARIS (FR)
(74) Mandataire: Plasseraud IP

(56) Documents cités:
- US-A1- 2019 275 955
- JIANNAN LI ET AL: "Interactive two-sided transparent displays", DESIGNING INTERACTIVE SYSTEMS, ACM, 2 PENN PLAZA, SUITE 701 NEW YORK NY 10121-0701 USA, 21 June 2014 (2014-06-21), pages 395 - 404, XP058051679, ISBN: 978-1-4503-2902-6, DOI: 10.1145/2598510.2598518
- PRAKASH JAI ET AL: "Digitally Transparent Interface Using Eye Tracking", PROCEDIA COMPUTER SCIENCE, ELSEVIER, AMSTERDAM, NL, vol. 84, 11 May 2016 (2016-05-11), pages 57 - 64, XP029532993, ISSN: 1877-0509, DOI: 10.1016/J.PROCS.2016.04.066
- LI JIANNAN: "UNIVERSITY OF CALGARY Two-Sided Transparent Display as a Collaborative Medium", 1 January 2015 (2015-01-01), pages 1 - 137, XP055873285, Retrieved from the Internet <URL:http://utouch.cpsc.ucalgary.ca/docs/JiannanLiThesis.pdf> [retrieved on 20211215]
- LI JIANNAN ET AL: "A two-sided collaborative transparent display supporting workspace awareness", INTERNATIONAL JOURNAL OF HUMAN-COMPUTER STUDIES, ELSEVIER, AMSTERDAM, NL, vol. 101, 24 January 2017 (2017-01-24), pages 23 - 44, XP029940512, ISSN: 1071-5819, DOI: 10.1016/J.IJHCS.2017.01.003

## Description

La présente invention concerne un compartiment passagers pour véhicule de transport de passagers comportant un écran d'information et une méthode d'utilisation d'un tel écran d'information.

Dans le domaine du transport de passagers, il est connu de fixer, au plafond d'un compartiment passagers de véhicule de transport de passagers, un écran destiné à l'information des passagers. Lorsqu'un tel écran est positionné au centre du compartiment, il n'est visible que par les passagers vers lesquels il est dirigé. Ainsi, il est courant de positionner deux écrans dos-à-dos pour qu'à tout emplacement du compartiment passagers, l'un des deux écrans soit visible par les passagers.

Une telle installation a l'inconvénient de présenter un encombrement important, au plafond du compartiment, et de ne pas être esthétique.

US 2019/275955 A1 décrit un véhicule comprenant un compartiment passagers comportant des sièges avant et des sièges arrière, ainsi qu'un écran transparent disposé entre les sièges avant et les sièges arrière. Les deux faces d'un tel écran sont donc visibles simultanément, mais l'affichage d'un tel écran n'est pas personnalisable en fonction des passagers regardant l'écran.

Le document JIANNAN LI ET AL : "Interactive two-sided transparent displays" (DESIGNING INTERACTIVE SYSTEMS ACM, 2014-06-21, pages 395-404) décrit un écran transparent interactif permettant à plusieurs utilisateurs, situés de part et d'autre de l'écran, de collaborer simultanément grâce à des contenus distincts mais synchronisés. Cependant, ce document se concentre sur la collaboration interactive via des saisies tactiles ou gestuelles et ne traite pas de l'adaptation dynamique du contenu en fonction du regard ou de la position individuelle des utilisateurs.

C'est à ces inconvénients qu'entend plus particulièrement remédier l'invention en proposant un nouvel écran d'information pour compartiment passagers plus esthétique et dont l'encombrement est plus réduit, dont l'affichage est adapté en fonction des passagers qui regardent l'écran.

À cet effet, l'invention concerne un compartiment passagers pour véhicule de transport de passagers, ce compartiment comportant un écran d'information des passagers. L'écran d'information est transparent et comprend deux faces respectivement dirigées vers l'avant et vers l'arrière du compartiment et qui sont respectivement lisibles par des passagers présents à l'avant et à l'arrière du compartiment. Selon l'invention, le compartiment comporte, en outre, au moins une unité de contrôle, qui contrôle l'affichage sur l'écran, et une caméra. En outre, la caméra détecte la cible du regard de chaque passager et l'unité de contrôle est prévue pour adapter le contenu de l'affichage sur l'écran en fonction des passagers qui regardent l'écran.

Grâce à l'invention, il est possible de proposer un nouveau compartiment passagers pour véhicule de transport de passagers équipé d'un écran transparent plus esthétique et à l'encombrement plus réduit, dont l'affichage est adapté en fonction des passagers qui regardent l'écran, à partir d'informations détectées par les caméras.

Selon des aspects avantageux, mais non obligatoire de l'invention, le compartiment passagers peut incorporer une ou plusieurs des caractéristiques suivantes, prises selon toutes combinaisons techniquement admissibles :
- L'écran est fixé à une face inférieure d'une base qui est elle-même fixée par sa face supérieure à un plafond du compartiment, ou l'écran est intégré à une paroi vitrée et relié à une base elle-même intégrée à un encadrement de la paroi vitrée.
- L'unité de contrôle est configurée pour traiter par oculométrie des données transmises par la caméra.
- L'unité de contrôle est configurée pour : lorsqu'un premier passager regarde une première face de l'écran, l'affichage sur l'écran est paramétré pour qu'un message contenu dans une image affichée sur l'écran soit lisible sur cette première face ; lorsqu'un second passager regarde une deuxième face de l'écran, l'affichage sur l'écran est paramétré pour qu'un message contenu dans une image affichée sur l'écran soit lisible sur cette deuxième face ; et lorsque le premier et le second passagers regardent respectivement la première face et la deuxième face de l'écran, l'affichage sur l'écran est paramétré pour qu'un message contenu dans une image affichée sur l'écran soit lisible sur ces deux faces.
- L'unité de contrôle est configurée pour que, lorsque le premier et le second passagers regardent respectivement la première face et la deuxième face de l'écran, l'affichage sur l'écran est paramétré pour être séparé en deux zones distinctes, un message contenu dans une image affichée sur une première zone étant lisible sur la première face et un message contenu dans une image affichée sur une seconde zone étant lisible sur la deuxième face.
- L'unité de contrôle est configurée pour que lorsque le premier et le second passagers regardent respectivement la première face et la deuxième face de l'écran, le contenu de l'écran est configuré pour représenter un support en rotation autour d'un axe vertical et un message affiché sur ce support est lisible alternativement sur la première face puis sur la deuxième face.
- L'unité de contrôle est configurée pour que, lorsque la caméra détecte qu'aucun passager ne regarde l'écran, alors l'écran entre en mode d'économie d'énergie.

Selon un autre aspect, l'invention concerne aussi l'utilisation d'un dispositif d'affichage de compartiment passagers comme moyen d'affichage au sein d'un compartiment passagers tel que mentionné ci-dessus comme incluant au moins une unité de contrôle et une caméra. Selon l'invention, l'utilisation du dispositif d'affichage comporte des étapes consistant à :
- filmer, à l'aide d'au moins une caméra, les passagers du compartiment passagers ;
- détecter, à l'aide d'une unité de contrôle si un passager regarde une face d'un écran du dispositif d'affichage ;
- modifier l'affichage de l'écran pour qu'un message contenu dans une image affichée sur la face de l'écran regardée par le passager soit lisible par le passager.

Cette utilisation d'un dispositif d'affichage de compartiment passagers induit les mêmes avantages que ceux mentionnés ci-dessus au sujet du compartiment de l'invention.

Avantageusement, l'étape de modification de l'affichage de l'écran de cette utilisation, s'il est détecté que deux passagers regardent chacun une face différente de l'écran, consiste à modifier l'affichage de l'écran pour qu'un message contenu dans une image affichée sur l'écran soit lisible depuis les deux faces de l'écran.

L'invention sera mieux comprise et d'autres avantages de celle-ci apparaitront plus clairement à la lumière de la description qui va suivre d'un mode de réalisation d'un compartiment passagers et d'une utilisation d'un dispositif d'affichage de compartiment passagers donnée uniquement à titre d'exemple et faite en référence aux dessins annexés dans lesquels :
[Fig. 1] La figure 1 est une coupe longitudinale de principe d'un compartiment passagers pour véhicule de transport de passagers, conforme à l'invention ;
[Fig. 2] La figure 2 est une vue de détail des deux faces d'un écran d'information du compartiment de la figure 1, dans une première configuration ;
[Fig. 3] La figure 3 est une vue de détail des deux faces de l'écran d'information, dans une deuxième configuration ;
[Fig. 4] La figure 4 est une vue de détail des deux faces de l'écran d'information, dans une troisième configuration.

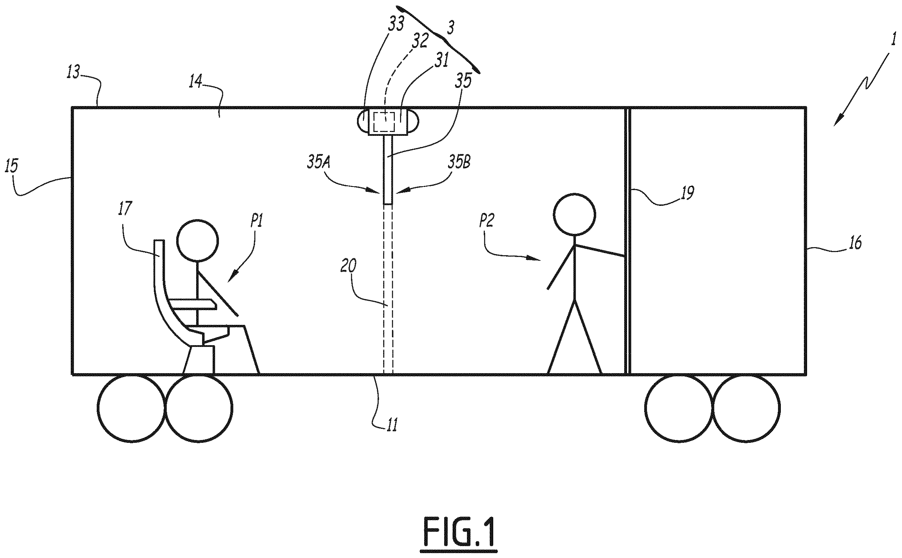

Un compartiment passagers 1 d'un véhicule de transport de passagers est représenté à la figure 1. Ce compartiment est délimité par un plancher 11, un plafond 13, deux cloisons latérales 14, une cloison avant 15 et une cloison arrière 16. Dans l'exemple représenté sur la figure 1, le compartiment passagers 1 comporte un siège 17, une barre de maintien 19 et un dispositif d'affichage 3, et accueille des passagers. Pour la clarté des dessins et de la description, seuls deux passagers P1 et P2 sont représentés.

L'avant du compartiment passagers 1 correspond à la moitié du compartiment située au plus proche de la cloison avant 15, et l'arrière du compartiment correspond à la moitié du compartiment située a plus proche de la cloison arrière 16. Le passager P1 est situé du côté avant du compartiment 1 et le passager P2 est situé du côté arrière du compartiment 1.

Le véhicule de transport de passagers peut être un véhicule ferroviaire tel qu'un train ou un tramway, ou bien un véhicule routier tel qu'un autocar, un véhicule de transport aérien, voire encore un véhicule de transport maritime. Le véhicule de transport de passagers peut être composé d'un seul ou de plusieurs compartiment passagers 1. Le sens de circulation du véhicule de transport peut être dirigé indifféremment vers l'avant ou vers l'arrière du compartiment 1.

Le dispositif d'affichage 3 est destiné à l'usage des passagers. Il permet aux passagers de consulter des informations pendant leur transport. Ces informations peuvent par exemple être l'heure, le trajet emprunté par le véhicule de transport, la prochaine station desservie, ou les actualités.

Le dispositif d'affichage 3 comprend une base 31, qui accueille des moyens électroniques comprenant une unité électronique 32 et un ensemble 33 de deux caméras 33A et 33B. Le dispositif d'affichage 3 comprend également un écran 35. La base 31 est de forme globalement parallélépipédique et est fixée au plafond 13 par sa face supérieure 311. L'écran 35 est vertical, est fixé à la face inférieure 313 de la base 31, et définit deux faces 35A et 35B, parallèles entre-elles et à deux faces latérales 315 de la base 31. Dans l'exemple représenté à la figure 1, la face 35A est dirigée vers l'avant du compartiment 1 et la face 35B est dirigée vers l'arrière. En d'autres termes, la face 35A est dirigée vers le passager P1 et la face 35B est dirigée vers le passager P2.

L'unité électronique 32 est configurée pour contrôler l'affichage sur l'écran 35 et constitue donc, à ce titre, une unité de contrôle.

En pratique, l'écran 35 a une diagonale comprise entre 304 et 1220 mm, de préférence égale à 736 mm. Son épaisseur est comprise entre 8 et 30 mm, de préférence égale à 9 mm.

L'écran 35 est un écran transparent, par exemple basé sur la technologie OLED, ou Organic Light-Emitting Diode en anglais. En pratique, il est comprend au moins trois couches, à savoir une couche émettrice, comprenant des diodes, disposée entre deux couches servant à la fois de support et de protection.

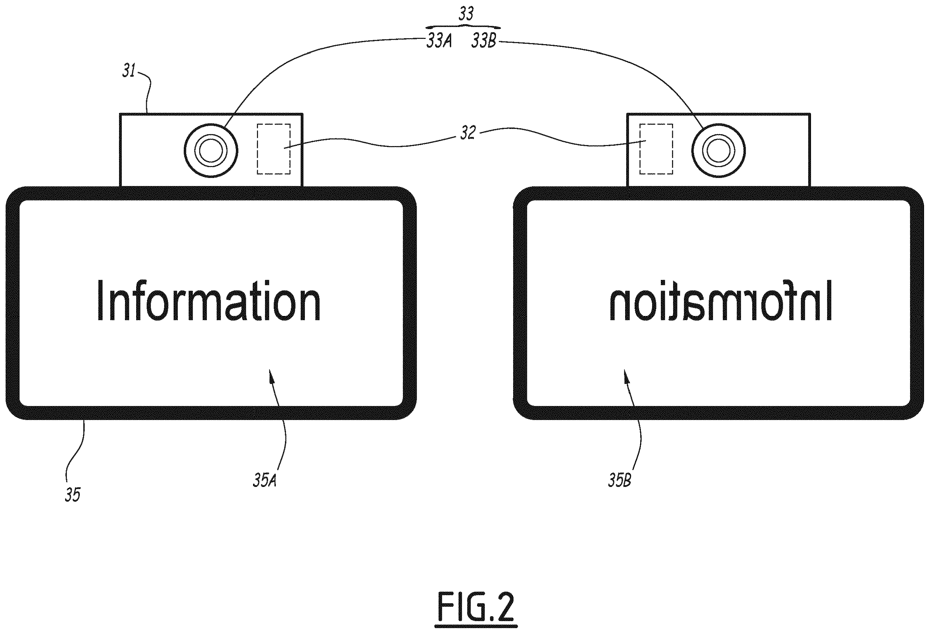

Ainsi, toute image affichée sur l'écran 35 est visible à la fois depuis la face 35A et depuis la face 35B. L'image visible depuis la face 35B est une image miroir de l'image visible depuis la face 35A. Un message d'information contenu dans l'image affichée sur l'écran 35 est alors lisible soit sur la face 35A, par le passager P1 situé à l'avant, comme représenté à la figure 2, soit sur la face 35B, par le passager P2 situé à l'arrière. On définit une face d'affichage principale comme la face sur laquelle un message contenu dans l'image affichée est lisible et une face d'affichage secondaire comme la face sur laquelle un message contenu dans l'image affichée n'est pas lisible. Dans la configuration de la figure 2, la face 35A est la face principale et la face 35B est la face secondaire.

Les deux caméras 33A et 33B sont configurées pour filmer l'intérieur du compartiment passagers 1. En pratique, la caméra 33A est disposée sur la base 31 du côté de la face 35A et la caméra 33B est disposée sur la base 31 du côté de la face 35B. Ainsi, dans l'exemple représenté, la caméra 33A filme l'avant du compartiment 1 et le passager P1 et la caméra 33B filme l'arrière de ce compartiment et le passager P2.

Les données issues des caméras 33A et 33B sont transmises à l'unité de contrôle 32 de la base 31. L'unité de contrôle 32 est configurée pour effectuer un traitement de ces données et déterminer si un passager regarde en direction de la face 35A ou de la face 35B de l'écran 35. Ce traitement est, par exemple, effectué par oculométrie, ce qui permet de détecter la cible du regard d'un individu. Grâce aux caméras 33A et 33B et au traitement par oculométrie, il est possible pour l'unité de contrôle 32 de faire la différence entre un passager qui regarde l'écran 35 et un autre passager situé au même emplacement mais qui ne regarde pas l'écran, ou qui tourne le dos à l'écran. Ainsi, l'unité de contrôle 32 peut être programmée pour que l'affichage d'informations sur l'écran 35 soit adapté uniquement aux passagers qui regardent l'écran. Cette méthode d'affichage est pratique dans un compartiment passagers pouvant accueillir un nombre élevé de passagers dont une partie seulement consulte l'écran.

De façon optionnelle, l'écran 35 peut également être intégré à une paroi vitrée 20. Une telle paroi vitrée 20 est soit mobile, comme par exemple une porte d'accès au compartiment passagers 1, soit fixe, comme par exemple une cloison délimitant le compartiment passagers 1 en plusieurs volumes ou une fenêtre ménagée dans l'une des cloisons 14, 15 ou 16.

Lorsque l'écran 35 est intégré à une paroi vitrée 20, il est relié à la base 31 qui est intégrée à un encadrement de la paroi vitrée et les caméras sont fixées sur cet encadrement.

La paroi vitrée 20 étant optionnelle, elle est représentée en pointillés à la figure 1.

Lorsque l'unité de contrôle 32 détecte qu'un passager regarde en direction de l'écran 35, alors l'image affichée sur l'écran est paramétrée pour que la face d'affichage principale soit la face que le passager regarde, c'est-à-dire que l'image est orientée pour qu'un message compris dans l'image puisse être lisible par ce passager sur cette face. Par exemple, si le passager P1 regarde en direction de l'écran 35, alors l'image affichée sur l'écran correspond à la représentation de la figure 2, c'est-à-dire que l'image est orientée pour qu'un message soit lisible sur la face 35A, qui est alors la face d'affichage principale, et être inversé sur la face 35B, qui est alors la face d'affichage secondaire.

Si le passager P2 regarde en direction de l'écran, alors l'orientation de l'image est retournée, c'est-à-dire qu'un message contenu dans l'image sera lisible sur la face 35B et sera inversé sur la face 35A.

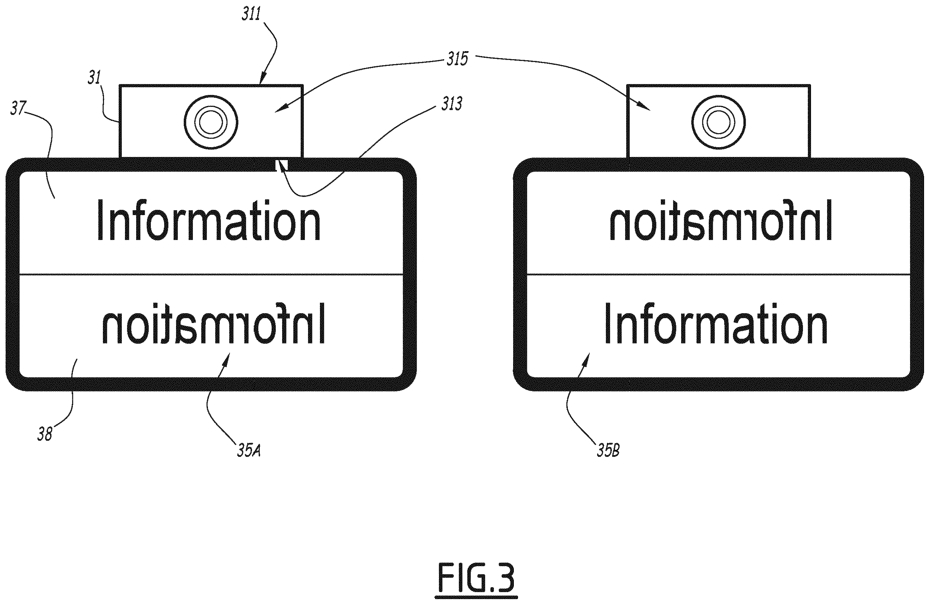

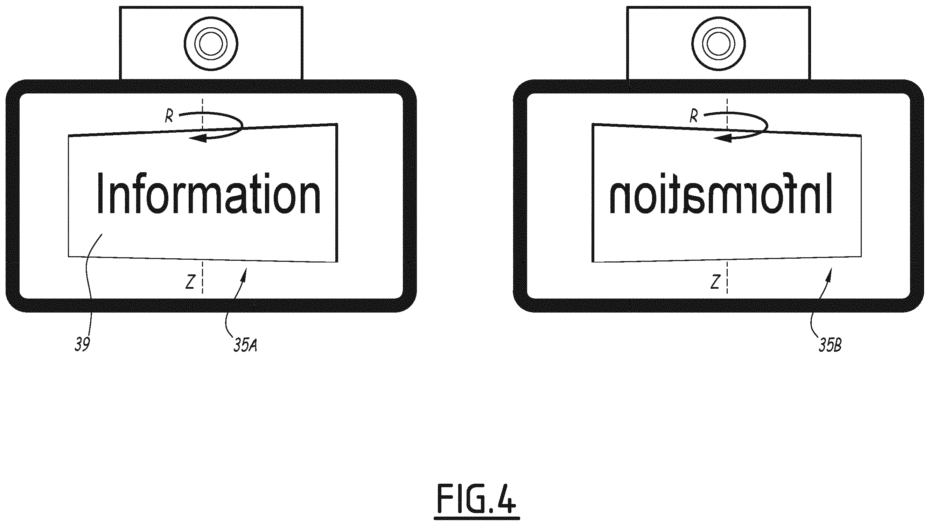

Si l'unité de contrôle 32 détermine que les deux passagers P1 et P2 regardent simultanément l'écran, alors l'affichage doit être configuré pour qu'un message contenu dans l'image affichée puisse être lisible par chacun des passagers. Pour cela, plusieurs méthodes d'affichage sont possibles, dont deux sont représentées aux figures 3 et 4.

La première de ces méthodes, visible à la figure 3, consiste à séparer l'écran 35 en deux zones distinctes. Une première zone supérieure 37 est configurée pour qu'un message affiché dans cette zone soit lisible sur la face 35A, c'est-à-dire par le passager P1, et une seconde zone inférieure 38 est configurée pour qu'un message affiché dans cette zone soit lisible sur la face 35B, c'est-à-dire par le passager P2. Ainsi, un même message peut être simultanément affiché sur les zones 37 et 38 et être lisible simultanément par les passagers P1 et P2, et l'écran n'a plus de face d'affichage principale.

Si le message à afficher est trop long par rapport à la taille des zones 37 et 38, alors le message est affiché de manière dynamique, par exemple sous la forme d'un défilement horizontal, qui permet d'afficher en plusieurs fois la totalité du message. Il est également possible d'ajuster la taille du message à afficher à la taille des zones 37 et 38, ou encore d'afficher successivement plusieurs messages partiels, chaque message partiel comportant une partie du message à afficher.

Grâce à cette méthode d'affichage, un message contenu dans une image affichée sur l'écran 35 sera lisible simultanément depuis les deux faces de l'écran.

La seconde de ces méthodes, visible à la figure 4, consiste à représenter sur l'écran 35 un support, par exemple une plaque 39 sur laquelle le message à fournir aux passagers est affiché. Cette plaque est représentée en rotation R autour d'un axe vertical fictif Z, c'est-à-dire que la plaque et le message qui y est affiché tournent fictivement en continu autour de cet axe. Ainsi, les informations sont lisibles successivement depuis la face 35A, comme représenté à la figure 4, puis depuis la face 35B, après une demi-révolution de la plaque. En pratique, l'affichage de la plaque 39 est configuré pour que la plaque effectue une rotation complète entre 2 et 10 secondes, de préférence en 3 secondes. En pratique, la durée d'une rotation complète dépend du nombre de mots qui sont affichés sur la plaque 39. De préférence, la durée de rotation est de 1,2 secondes par mot affiché, soit par exemple 3,6 secondes pour une rotation complète d'un affichage de trois mots.

La vitesse de rotation de la plaque 39 est soit constante, soit variable afin d'être plus lente lorsqu'elle est parallèle aux faces 35A et 35B et plus rapide lorsqu'elle est perpendiculaire à ces faces, afin de maximiser le temps pendant lequel les passagers peuvent lire le message qui y est affiché. Grâce à cette méthode de vitesse de rotation variable, la durée de rotation par mot affiché est réduite, de préférence à 0,9 secondes, soit par exemple 2,7 secondes pour une rotation complète d'un affichage de trois mots.

En variante, l'écran 35 affiche un support 39 différent d'une plaque.

Grâce à cette seconde méthode d'affichage, un message contenu dans une image affichée sur l'écran 35 sera lisible alternativement depuis les deux faces de l'écran.

Pour l'exploitant du véhicule de transport contenant le compartiment passagers 1, l'utilisation du dispositif d'affichage 3 comporte les étapes suivantes, qui sont automatisées grâce à l'unité de contrôle 32 :
- filmer, à l'aide des caméras 33, les passagers P1, P2 du compartiment passagers ;
- détecter, à l'aide de l'unité de contrôle si un passager P1 ou P2 regarde la face 35A ou 35B de l'écran 35 ;
- si seul le passager P1 ou le passager P2 regarde l'écran 35, modifier l'affichage de l'écran pour qu'un message contenu dans une image affichée sur la face de l'écran regardée par le passager soit lisible par le passager ; et
- si les deux passagers P1 et P2 regardent chacun une face de l'écran 35, respectivement la face 35A et la face 35B, modifier l'affichage de l'écran pour qu'un message contenu dans une image affichée sur l'écran soit lisible depuis les deux faces de l'écran.

De plus, si l'unité de contrôle 32 détecte qu'aucun passager ne regarde l'écran 35 pendant un temps prédéterminé, par exemple 30 secondes, alors il est possible de basculer l'écran 35 en mode d'économie d'énergie, ou d'éteindre l'écran 35. L'écran retrouve ensuite son fonctionnement normal, tel que décrit ci-dessus, dès qu'il est détecté, au moyen de l'une des caméras 33A et 33B et de l'unité de contrôle 32, qu'un passager regarde l'écran 35. Un mode d'économie d'énergie est un mode dans lequel l'écran 35 est allumé, mais sa consommation en énergie est réduite, par exemple en affichant une image fixe, en affichant une image d'une couleur spécifique, ou en réduisant sa luminosité de 20%.

Lorsqu'il est détecté que plus de deux passagers regardent l'écran 35 en étant tous situés du même côté du compartiment passagers 1, par exemple à l'avant du compartiment, alors l'utilisation du dispositif d'affichage est la même que lorsqu'il est détecté qu'un seul passager regarde l'écran 35.

Lorsqu'il est détecté que trois passagers ou plus regardent l'écran 35, qu'au moins un passager regarde l'écran depuis l'avant du compartiment et qu'au moins un passager regarde l'écran depuis l'arrière du compartiment, alors l'utilisation du dispositif d'affichage est la même que lorsqu'il est détecté que deux passagers regardent l'écran, chacun depuis un côté du compartiment.

En variante non-représentée de l'invention, la base 31 ne comprend pas l'unité de contrôle 32, et l'unité de contrôle est déportée, par exemple dans une armoire technique du compartiment passagers 1. La liaison entre l'unité de contrôle 32, les caméras 33 et l'écran 35 est soit filaire, soit sans-fil, par exemple par liaison Wi-Fi ou Bluetooth.

En variante non-représentée de l'invention, le dispositif d'affichage 3 ne comprend pas d'unité de contrôle et l'écran 35 est en permanence configuré pour qu'un message contenu dans une image affichée sur l'écran 35 soit lisible simultanément depuis les deux faces de l'écran.

En variante non-représentée de l'invention, la base 31 comprend une seule caméra qui dispose d'un champ de vision de 360 degrés.

En variante non-représentée de l'invention, le compartiment passagers 1 comporte plusieurs dispositifs d'affichage 3, chacun fonctionnant de manière autonome conformément à l'invention.

En variante non-représentée de l'invention, la base 31 est intégrée dans le plafond 13 du compartiment 1, de sorte que seul l'écran 35 est visible par les passagers. Dans une telle configuration, les caméras 33 sont disposées sur le plafond ou sur les cloisons 15, ou sont intégrées à l'écran 35.

Les modes de réalisation et les variantes envisagées ci-dessus peuvent être combinés pour générer de nouveaux modes de réalisation dans l'invention.

## Revendications

1. Compartiment passagers (1) pour véhicule de transport de passagers, ce compartiment comportant un écran (35) d'information des passagers (P1, P2), dans lequel l'écran (35) est transparent et comprend deux faces (35A, 35B) respectivement dirigées vers l'avant (15) et vers l'arrière (16) du compartiment (1) et qui sont respectivement lisibles par des passagers présents à l'avant et à l'arrière du compartiment,
**caractérisé en ce que** le compartiment (1) comporte, en outre, au moins une unité de contrôle (32), qui contrôle l'affichage sur l'écran (35), et une caméra (33A, 33B), **en ce que** la caméra détecte la cible du regard de chaque passager (P1, P2) et **en ce que** l'unité de contrôle est prévue pour adapter le contenu de l'affichage sur l'écran (35) en fonction des passagers qui regardent l'écran.

2. Compartiment passagers (1) selon la revendication 1, **caractérisé en ce que** l'écran (35) est fixé à une face inférieure (313) d'une base (31) qui est elle-même fixée par sa face supérieure (311) à un plafond (13) du compartiment, ou **en ce que** l'écran (35) est intégré à une paroi vitrée (20) et relié à une base (31) elle-même intégrée à un encadrement de la paroi vitrée (20).

3. Compartiment passagers (1) selon l'une des revendications précédentes, **caractérisé en ce que** l'unité de contrôle (32) est configurée pour traiter par oculométrie des données transmises par la caméra (33A, 33B)

4. Compartiment passagers (1) selon l'une des revendications précédentes, **caractérisé en ce que** l'unité de contrôle (32) est configurée pour :
- lorsqu'un premier passager (P1) regarde une première face (35A) de l'écran (35), l'affichage sur l'écran (35) est paramétré pour qu'un message contenu dans une image affichée sur l'écran soit lisible sur cette première face ;
- lorsqu'un second passager (P2) regarde une deuxième face (35B) de l'écran (35), l'affichage sur l'écran est paramétré pour qu'un message contenu dans une image affichée sur l'écran soit lisible sur cette deuxième face ; et
- lorsque le premier et le second passagers (P1, P2) regardent respectivement la première face (35A) et la deuxième face (35B) de l'écran (35), l'affichage sur l'écran est paramétré pour qu'un message contenu dans une image affichée sur l'écran soit lisible sur ces deux faces.

5. Compartiment passagers (1) selon la revendication 4, **caractérisé en ce que** l'unité de contrôle (32) est configurée pour que, lorsque le premier et le second passagers (P1, P2) regardent respectivement la première face (35A) et la deuxième face (35B) de l'écran (35), l'affichage sur l'écran est paramétré pour être séparé en deux zones distinctes (37, 38), un message contenu dans une image affichée sur une première zone (37) étant lisible sur la première face (35A) et un message contenu dans une image affichée sur une seconde zone (38) étant lisible sur la deuxième face (35B).

6. Compartiment passagers (1) selon la revendication 4, **caractérisé en ce que** l'unité de contrôle (32) est configurée pour que lorsque le premier et le second passagers (P1, P2) regardent respectivement la première face (35A) et la deuxième face (35B) de l'écran (35), le contenu de l'écran est configuré pour représenter un support (39) en rotation (R) autour d'un axe vertical (Z) et **en ce qu'**un message affiché sur ce support est lisible alternativement sur la première face (35A) puis sur la deuxième face (35B).

7. Compartiment passagers (1) selon l'une des revendications précédentes, **caractérisé en ce que** l'unité de contrôle (32) est configurée pour que, lorsque la caméra (33) détecte qu'aucun passager ne regarde l'écran (35), alors l'écran entre en mode d'économie d'énergie.

8. Utilisation d'un dispositif d'affichage (3) de compartiment passagers (1) comme moyen d'affichage au sein d'un compartiment passagers (1) conforme à l'une des revendications précédentes, **caractérisée en ce que** l'utilisation du dispositif d'affichage (3) comporte des étapes consistant à :
- filmer, à l'aide d'au moins une caméra (33A, 33B), les passagers (P1, P2) du compartiment passagers (1) ;
- détecter, à l'aide d'une unité de contrôle (32) si un passager (P1, P2) regarde une face (35A, 35B) d'un écran (35) du dispositif d'affichage (3) ;
- modifier l'affichage sur l'écran (35) pour qu'un message contenu dans une image affichée sur la face de l'écran regardée par le passager soit lisible par le passager.

9. Utilisation d'un dispositif d'affichage (3) selon la revendication 8, **caractérisée en ce que** s'il est détecté que deux passagers (P1, P2) regardent chacun une face (35A, 35B) différente de l'écran (35), alors l'affichage de l'écran est modifié pour qu'un message contenu dans une image affichée sur l'écran soit lisible depuis les deux faces de l'écran.

## Patentansprüche

1. Fahrgastraum (1) für ein Fahrzeug zur Beförderung von Fahrgästen, wobei dieser Raum einen Bildschirm (35) zur Information der Fahrgäste (P1, P2) umfasst, wobei der Bildschirm (35) transparent ist und zwei Seiten (35A, 35B) aufweist die jeweils nach vorne (15) und nach hinten (16) im Raum (1) gerichtet sind und jeweils für die vorne und hinten im Raum befindlichen Fahrgästen lesbar sind,
**dadurch gekennzeichnet, dass** der Raum (1) ferner wenigstens eine Steuereinheit (32) umfasst, die die Anzeige auf dem Bildschirm (35) steuert, und eine Kamera (33A, 33B) aufweist, dass die Kamera das Blickziel jedes Fahrgastes (P1, P2) erfasst und dass die Steuereinheit dazu vorgesehen ist, den Inhalt der Anzeige auf dem Bildschirm (35) in Abhängigkeit von den Fahrgästen, die auf den Bildschirm schauen, anzupassen.

2. Fahrgastraum (1) nach Anspruch 1, **dadurch gekennzeichnet, dass** der Bildschirm (35) an einer Unterseite (313) einer Basis (31) befestigt ist, die ihrerseits mit ihrer Oberseite (311) an einer Decke (13) des Fahrgastraums befestigt ist, oder dass der Bildschirm (35) in eine Glaswand (20) integriert und mit einer Basis (31) verbunden ist, die ihrerseits in einen Rahmen der Glaswand (20) integriert ist.

3. Fahrgastraum (1) nach einem der vorhergehenden Ansprüche, **dadurch gekennzeichnet, dass** die Steuereinheit (32) dazu ausgebildet ist, von der Kamera (33A, 33B) übertragene Daten mittels Okulometrie zu verarbeiten.

4. Fahrgastraum (1) nach einem der vorhergehenden Ansprüche, **dadurch gekennzeichnet, dass** die Steuereinheit (32) wie folgt ausgebildet ist:
- wenn ein erster Fahrgast (P1) auf eine erste Seite (35A) des Bildschirms (35) schaut, ist die Anzeige auf dem Bildschirm (35) so eingestellt, dass eine in einem auf dem Bildschirm angezeigten Bild enthaltene Meldung auf dieser ersten Seite lesbar ist;
- wenn ein zweiter Passagier (P2) auf eine zweite Seite (35B) des Bildschirms (35) schaut, ist die Anzeige auf dem Bildschirm so eingestellt, dass eine in einem auf dem Bildschirm angezeigten Bild enthaltene Meldung auf dieser zweiten Seite lesbar ist; und
- wenn der erste und der zweite Passagier (P1, P2) jeweils auf die erste Seite (35A) und die zweite Seite (35B) des Bildschirms schauen, ist die Anzeige auf dem Bildschirm so eingestellt, dass eine in einem auf dem Bildschirm angezeigten Bild enthaltene Meldung auf beiden Seiten lesbar ist.

5. Fahrgastraum (1) nach Anspruch 4, **dadurch gekennzeichnet, dass** die Steuereinheit (32) derart ausgebildet ist, dass, wenn der erste und der zweite Passagier (P1, P2) jeweils auf die erste Seite (35A) und die zweite Seite (35B) des Bildschirms (35) schauen, die Anzeige auf dem Bildschirm so eingestellt ist, dass sie in zwei getrennte Bereiche (37, 38) unterteilt ist, wobei eine in einem in einem ersten Bereich (37) angezeigten Bild enthaltene Nachricht auf der ersten Seite (35A) lesbar ist und eine in einem in einem zweiten Bereich (38) angezeigten Bild enthaltene Nachricht auf der zweiten Seite (35B) lesbar ist.

6. Fahrgastraum (1) nach Anspruch 4, **dadurch gekennzeichnet, dass** die Steuereinheit (32) derart ausgebildet ist, dass, wenn der erste und der zweite Fahrgast (P1, P2) jeweils auf die erste Seite (35A) und die zweite Seite (35B) des Bildschirms (35) schauen, der Inhalt des Bildschirms so eingestellt ist, dass er ein Medium (39) darstellt, das sich um eine vertikale Achse (Z) dreht (R), und dass eine auf diesem Medium angezeigte Meldung abwechselnd auf der ersten Seite (35A) und dann auf der zweiten Seite (35B) lesbar ist.

7. Fahrgastraum (1) nach einem der vorhergehenden Ansprüche, **dadurch gekennzeichnet, dass** die Steuereinheit (32) so ausgebildet ist, dass, wenn die Kamera (33) erkennt, dass kein Fahrgast auf den Bildschirm (35) schaut, der Bildschirm in einen Energiesparmodus wechselt.

8. Verwendung einer Anzeigevorrichtung (3) für einen Fahrgastraum (1) als Anzeigevorrichtung in einem Fahrgastraum (1) nach einem der vorhergehenden Ansprüche, **dadurch gekennzeichnet, dass** die Verwendung der Anzeigevorrichtung (3) die folgenden Schritte umfasst:
- Filmen der Passagiere (P1, P2) des Fahrgastraums (1) mit wenigstens einer Kamera (33A, 33B);
- Erkennen mittels einer Steuereinheit (32), ob ein Passagier (P1, P2) auf eine Seite (35A, 35B) eines Bildschirms (35) der Anzeigevorrichtung (3) schaut,
- Ändern der Anzeige auf dem Bildschirm (35), so dass eine in einem auf der vom Fahrgast angeschauten Seite des Bildschirms angezeigten Bild enthaltene Meldung für den Fahrgast lesbar ist.

9. Verwendung einer Anzeigevorrichtung (3) nach Anspruch 8, **dadurch gekennzeichnet, dass**, wenn festgestellt wird, dass zwei Passagiere (P1, P2) jeweils eine unterschiedliche Seite (35A, 35B) des Bildschirms (35) betrachten, die Anzeige des Bildschirms so geändert wird, dass eine in einem auf dem Bildschirm angezeigten Bild enthaltene Meldung von beiden Seiten des Bildschirms lesbar ist.

## Claims

1. A passenger compartment (1) for a passenger transport vehicle, this compartment comprising a screen (35) for informing the passengers (P1, P2), wherein the screen (35) is transparent and comprises two faces (35A, 35B) respectively directed towards the front (15) and towards the rear (16) of the compartment (1) and which are respectively readable by passengers present at the front and at the rear of the compartment,
**characterised in that** the compartment (1) further comprises at least one control unit (32), which controls display on the screen (35), and a camera (33A, 33B), **in that** the camera detects the target of each passenger's (P1, P2) gaze and **in that** the control unit is designed to adapt the content of display on the screen (35) according to the passengers who look at the screen.

2. The passenger compartment (1) according to claim 1, **characterised in that** the screen (35) is attached to a lower face (313) of a base (31) which is itself attached through its upper face (311) to a ceiling (13) of the compartment, or **in that** the screen (35) is integrated into a glazed wall (20) and connected to a base (31) itself integrated into a casing of the glazed wall (20).

3. The passenger compartment (1) according to one of the preceding claims, **characterised in that** the control unit (32) is configured to process data transmitted by the camera (33A, 33B) by eye tracking.

4. The passenger compartment (1) according to one of the preceding claims, **characterised in that** the control unit (32) is configured so that:
- when a first passenger (P1) looks at a first face (35A) of the screen (35), display on the screen (35) is configured so that a message contained in an image displayed on the screen is readable on this first face;
- when a second passenger (P2) looks at a second face (35B) of the screen (35), display on the screen is configured so that a message contained in an image displayed on the screen is readable on this second face; and
- when the first and second passengers (P1, P2) look at the first face (35A) and the second face (35B) of the screen (35) respectively, display on the screen is configured so that a message contained in an image displayed on the screen is readable on these two faces.

5. The passenger compartment (1) according to claim 4, **characterised in that** the control unit (32) is configured so that, when the first and second passengers (P1, P2) look at the first face (35A) and the second face (35B) of the screen (35) respectively, display on the screen is configured to be separated into two distinct zones (37, 38), a message contained in an image displayed on a first zone (37) being readable on the first face (35A) and a message contained in an image displayed on a second zone (38) being readable on the second face (35B).

6. The passenger compartment (1) according to claim 4, **characterised in that** the control unit (32) is configured so that when the first and second passengers (P1, P2) look at the first face (35A) and the second face (35B) of the display (35) respectively, the content of the display is configured to represent a support (39) rotating (R) about a vertical axis (Z) and **in that** a message displayed on this support is alternately readable on the first face (35A) and then on the second face (35B).

7. The passenger compartment (1) according to one of the preceding claims, **characterised in that** the control unit (32) is configured so that, when the camera (33) detects that no passenger is looking at the screen (35), then the screen enters an energy-saving mode.

8. A use of a display device (3) for a passenger compartment (1) as a display means within a passenger compartment (1) in accordance with one of the preceding claims, **characterised in that** the use of the display device (3) comprises steps of:
- filming, using at least one camera (33A, 33B), the passengers (P1, P2) of the passenger compartment (1);
- detecting, using a control unit (32), whether a passenger (P1, P2) looks at a face (35A, 35B) of a screen (35) of the display device (3);
- modifying display on the screen (35) so that a message contained in an image displayed on the face of the screen the passenger looks at is readable by the passenger.

9. A use of a display device (3) according to claim 8, **characterised in that** if it is detected that two passengers (P1, P2) each look at a different face (35A, 35B) of the screen (35), then display of the screen is modified so that a message contained in an image displayed on the screen is readable from both faces of the screen.
